# EUROPEAN PATENT APPLICATION

(11) **EP 1 467 552 A2**
(43) Date of publication of application: **13.10.2004**
(21) Application number: 04075951.6
(22) Date of filing: 26.03.2004
(51) Int. Cl.: H04N 1/32

(54) **An index print having a correction indicator thereon and a method of making the index print**

(30) Priority: 07.04.2003 US 408384
(71) Applicant: EASTMAN KODAK COMPANY, Rochester, New York 14650 (US)
(72) Inventor: Kurtenbach, Thomas J., Rochester New York 14650 (US); Huntoon, David G., Rochester New York 14650-2201 (US); Murray, Thomas J., Rochester New York 14650-2201 (US)
(74) Representative: Weber, Etienne Nicolas

(57) **Abstract**

The present invention relates to a method and system of providing imaging or photofinishing services. In the method and system of the present invention, captured images received from a customer are scanned or read to detect any defects in the images and the images are appropriately corrected. In order to provide the customer with information regarding the corrections, an index print is created that includes a plurality of thumbnail images thereon which corresponds to the captured images, and an indicator is provided on or near the thumbnail images which correspond to the corrected images. This provides a visual indication of the type of correction that has been made to the corrected images.

## Description

The present invention relates to an index print that has an eye-readable indicator, icon or graphical symbol thereon that represents a correction that has been made to an image, and a method of making the index print.

With the advent of digital printing onto media, many opportunities are provided for improving the quality of the output of the image. As an example, quality of the output of the image is particularly important when images are produced by printing on a photographic media such as photographic paper. Use of a digital printer enables various enhancements and/or corrections to images printed from film so as to compensate for poor flash or lighting during the taking of the image by the camera, or other flaws caused by the camera or picture-taker. Use of a digital printer also allows enhancements in sharpness and permits dust and scratch removal. Digital printers also permit corrections with respect to red-eye, tone scale, exposure and noise. With all of the these improvements, it is sometimes very difficult for the customer to know and appreciate the benefit that has been or can be provided to the consumer.

U.S. Patent No. 5,689,610 discloses a method of making an index print where the index print includes an indicator to show where an image is stored on a motion picture recording medium.

U.S. Patent No. 5,757,468 discloses an apparatus and method for printing sound icons on a photographic print such as an index print.

U.S. Patent No. 5,706,097 shows an index print that includes an index code which represents that the image includes data with respect to motion sequences and sound sequences.

The use of an index print as noted above permits the illustration of all the images within a customer order in the form of thumbnail images or imagettes, and further permits the display of specific information about the images. However, the information provided on the index prints as noted above do not provide information with respect to what has been corrected, removed or enhanced on the image. More specifically, the patents noted above do not show or suggest the provision of an indicator icon or graphical symbol on an index print to indicate that the originally captured image has been digitally corrected or enhanced by, for example, removing red-eye, correcting brightness, correcting color balance, etc.

What is needed is an index print and a method of making an index print which includes an indicator, icon or graphical symbol which indicates that defects in captured images have been detected and corrected, and further indicates the type of correction or enhancement made.

The present invention provides for an index print and a method of making an index print, wherein indicators are provided on or near thumbnail images or imagettes of the index print to show that an image correction has been performed on the images in the customer's order, and to further show the type and extent of the correction. With the present invention, it possible to identify corrected images with an icon on the corresponding thumbnail image of the index print. Additional features of the present invention includes an indication of the number of fixes or corrections made to the image and the location of the corrections.

The index print of the present invention enables the use of a single photographic print to inform the consumer that images of his/her order have been corrected or enhanced and further indicate the type of correction made to the image.

The present invention therefore relates to a method of providing imaging services which comprises the steps of receiving an order from a customer requesting imaging services for captured images; creating an index print which includes a plurality of thumbnail images thereon which correspond to the captured images; and providing a red-eye icon adjacent to thumbnail images of the plurality of thumbnail images where red-eye has been detected and corrected in the captured images.

The present invention also relates to a method of providing imaging services which comprises the steps of receiving images from a customer; detecting defects in the images; correcting images of the received images where defects have been detected; creating an index print which includes thumbnail images that correspond to the received images; and providing an indicator adjacent to the thumbnail images which correspond to the corrected images, with the indicator providing a visual indication of the type of correction made to the corrected images.

The present invention further relates to an index print which comprises a plurality of thumbnail images, wherein at least one of the thumbnail images is a corrected image in which a defect has been detected and corrected; and an indicator provided in a vicinity of the at least one thumbnail image, with the indicator providing a visual indication of a type of correction made to the corrected image.

The present invention further relates to a method of creating an index print which comprises the steps of providing a plurality of thumbnail images on a photographic print; determining which of the plurality of thumbnail images are images in which an image correction has been performed; and providing an indicator in a vicinity of the thumbnail images where image correction has been performed, with the indicator representing a type of correction made to the image.

The present invention further relates to a method of providing photofinishing services which comprises the steps of receiving a photofinishing order from a customer; providing photographic prints in accordance with the photofinishing order; creating an index print which includes a plurality of thumbnail images thereon which correspond to images on each of the photographic prints; and providing a red-eye icon in a vicinity of thumbnail images of the plurality of thumbnail images where red-eye has been detected and corrected.

The present invention further relates to a photofinishing method which comprises the steps of receiving photographic film having exposed images thereon from a customer; detecting defects in the exposed images; processing the photographic film to create photographic prints that include the exposed images, wherein the processing step comprises the step of correcting images on which defects have been detected; creating an index print which includes thumbnail images that correspond to the images on the photographic prints; and providing an indicator near the thumbnail images which correspond to the corrected images, with the indicator providing a visual indication of the type of correction made to the corrected images.
Fig. 1 is a schematic view of an apparatus which can be used to produce prints in accordance with the present invention;
Fig. 2 is a schematic illustration of a further processing or photofinishing system which can be used to create prints in accordance with the present invention;
Fig. 3 is an index print with an indicator in accordance with a first embodiment of the present invention;
Fig. 4 is an index print with an indicator in accordance with a second embodiment of the present invention;
Fig. 5 is an index print with an indicator in accordance with a third embodiment of the present invention;
Figs. 6A-6E are examples of various indicators which can be used in the present invention, wherein each of the figures show a single thumbnail image or imagette of the index print;
Fig. 7 is an example of a further embodiment in accordance with the present invention; and
Fig. 8 is an illustration of a further embodiment of the present invention.

Referring now to the drawings, wherein like reference numerals represent identical or corresponding parts throughout the several views, the present invention provides for an index print having a correction indicator and a method of creating the index print. The indicators provided on the index print of the present invention represent, in an eye-readable manner, the type of corrections that have been made to selected images on the index print. Therefore, in one embodiment of the system and method of the present invention, the customer will receive his/her conventional photographic prints and optionally negatives and other photographic products in accordance with his/her order. During the processing of the photographic prints, image enhancements and/or corrections to selected images may have been made so as to correct the image for defects which may have been caused during the picture-taking process. With the system and method of present invention, an index print is further provided to the customer, wherein the index print has an indicator on or near each of the thumbnail images or imagettes which correspond to images where a correction has been made. The indicator provides a visual indicator as to the type of correction that has been made.

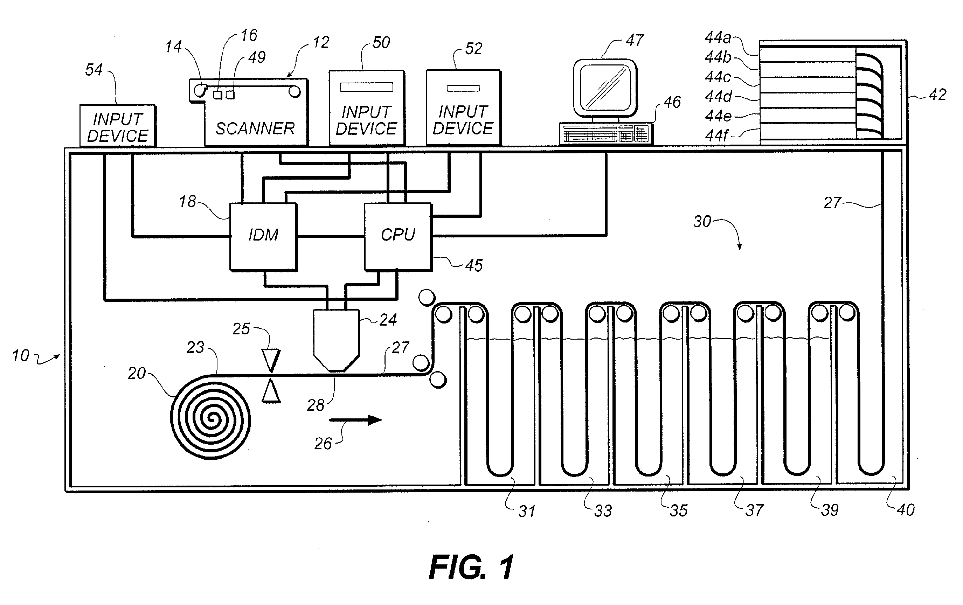

Referring now to Fig. 1, in one embodiment of the invention, a customer order involves processing photographic film having exposed images thereon. In order to process the photographic film, an apparatus 10 as illustrated in Fig. 1 may be utilized. As shown in Fig. 1, apparatus 10 can be designed to print digital images onto photosensitive media, paper or material. In particular, apparatus 10 can be of the type commonly referred to a photographic minilab. As is typical with most minilabs, customer image orders are provided for printing of images onto a photosensitive media. A customer image order for the purpose of the present invention can be a roll of developed photographic film as noted above, or a digital record file of a printing order containing a plurality of images thereon (i.e., images transferred to the lab via the internet or a digital storage media). In the particular embodiment illustrated, apparatus 10 includes a scanner 12 which is designed to received and scan a roll of developed film 14. The roll of developed film 14 is transported past sensor 16 in scanner 12 which scans the images on film 14 so as to provide a digital record of the customer images. Scanner 12 scans at a resolution sufficient to provide quality prints as well as an index print. The digital record of the image is forwarded to an image data manager (IDM 18) where the images are manipulated as preprogrammed. In the embodiment illustrated, IDM 18 comprises a computer (microprocessor) used for manipulation of the digital images contained in the digital record file. IDM 18 further includes a memory for storing of the digital record of the customer image order.

Apparatus 10 further includes a supply roll 20 containing a web of photosensitive media 23, which in the present invention comprises photographic paper. A cutting mechanism 25 is provided for cutting the web of photosensitive media into individual cut sheets. The mechanism 25 may cut the web into sheets having any desired lengths. Appropriate transport mechanisms, not shown, are provided for advancing of the cut sheets in the direction indicated by arrow 26 along processing path 27 through apparatus 10. In particular, the cut sheets are transported from cutting mechanism 25 to an exposure gate 28 whereby digital printer 24 exposes the individual images of the customer image order onto individual sheets, respectively, as they pass exposure gate 28.

As is typical with minilabs, apparatus 10 is further provided with a processing section 30 wherein the cut sheets, after leaving exposure gate 28 are passed therethough for development as is customarily done in such devices. In the particular embodiment illustrated, the cut sheets are passed through a developer station 31 containing developer solution, a bleach/fix station 33 containing a bleach/fix solution, and a plurality of wash stations 35, 37 and 39 each containing a washing solution, and through a dryer section 40 for drying the photosensitive media. The individual prints of the images are then forwarded to a sorter 42 wherein the prints for each customer image order are collated into separate bins 44a-44f, each bin preferably receiving an individual customer image order. It is to be understood that any desired number of bins 44 may be provided as appropriate for the apparatus 10 and sorted in accordance with any desired sorting criteria.

As is customary, a CPU (computer) 45, is provided for controlling operation of the apparatus 10 and its various components. A user/operator interface 46, which includes a viewing screen 47, is also provided, for allowing an operator to enter instructions for operation of the apparatus 10 and monitor operation of the apparatus as is customarily done.

An appropriate computer printing program is provided for controlling operation of IDM 18. The computer program is provided in an appropriate format which allows loading of the program into apparatus 10 which causes IDM 18 to perform the required steps. In particular, the computer program is designed so that IDM 18 will first obtain and store a complete customer image order prior to printing. Within the context of the present invention, when processing the customer order, the images can be scanned to detect defects such as red-eye, underexposure, overexposure, etc. Appropriate enhancement and/or correction algorithms, which have been preprogrammed into IDM 18, can then be applied to the customer image order so as to correct the defects and/or improve the overall aesthetic appearance of the images when printed. It is to be understood that any desired enhancements and/or corrections may be applied to the images. Within the context of the present invention, the process of producing a digitally enhanced image, as an example, can comprise changing pixel values to maximize content that is captured either on film or digitally. For example, but not by way of limitation, the following are a few of the enhancements that may be applied: contrast adjustment, red-eye removal, color balance, removal of dust marks or scratches and sharpness adjustments. In addition, custom corrections, such as crop and zoom, can be programmed or manually entered into the digital printer. After the stored digital images are enhanced, they are forwarded to printer 24 for printing.

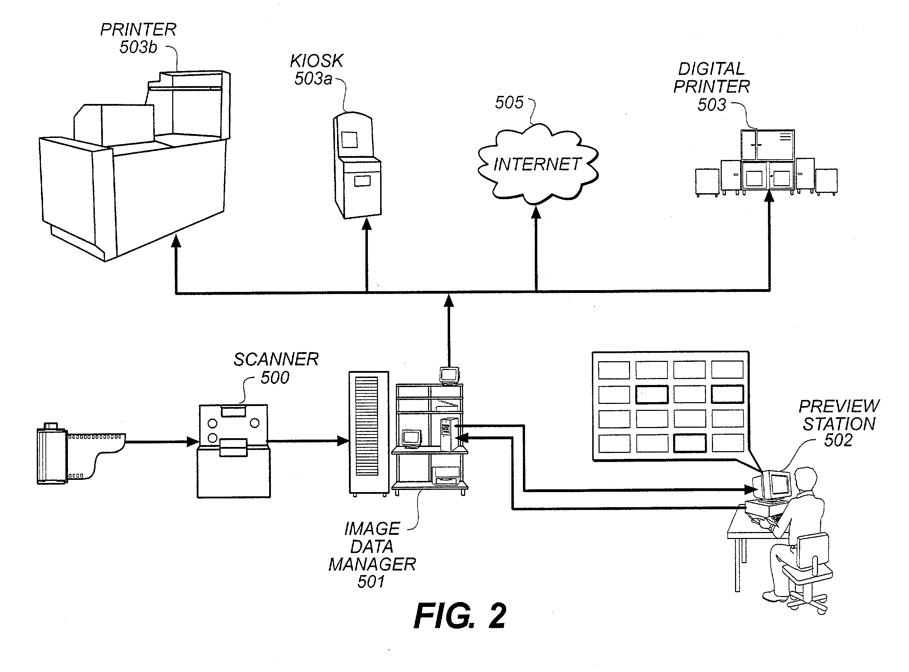

In addition to using a minilab, an index print as well as photographic prints in accordance with the present invention can be realized through use of a wholesale lab as illustrated in Fig. 2. As shown in Fig. 2, a customer order including film is scanned at a scanner 500. From there, the digital record of the images is processed at IDM 501, and optionally, an operator can preview images at a preview station 502. A digital printer 503 can be operationally associated with IDM 501 to produce service prints, index prints, etc. based on the customer order. As a further option, the images can be forwarded to the lab via the internet and can be forwarded to a customer's home computer or some further remote location via an internet connection 505. As a still further option, the images can be received from and/or forwarded to a kiosk 503a operationally associated with IDM 501 via a kiosk connection or forwarded to a remote printer 503b.

As described above, a feature of a digital lab relates to the application of appropriate enhancement and/or correction algorithms to an image. These enhancement algorithms are applied to the image so as to correct defects in the image caused by the picture taking process and/or improve the overall aesthetic appearance of the images when printed. As further noted above, any desired enhancements and/or corrections may be applied to the images. Within the context of the present invention, the process of producing a digitally enhanced or corrected image, as an example, can comprise contrast adjustment, red-eye removal, color balance, removal of dust marks or scratches, sharpness adjustments, brightness correction, exposure correction, etc. In addition, custom corrections such as crop and zoom can be programmed or manually entered into the digital printer.

Therefore, as part of the method and system of the present invention, the images of the customer order are read or scanned to detect any defects which may be corrected by way of the digital enhancements. Once those defects are detected, the image is corrected in accordance with the appropriate image enhancement algorithms and the photographic print with the corrected image (if part of the customer order) is thereafter printed. Along with the detection, each of the images which have been corrected and/or enhanced is noted for the purpose of providing an indicator on an index print. Thereafter, an index print is created wherein each of the images of the customer order which have been corrected and/or enhanced will include an indicator representative of the type of correction/enhancement made.

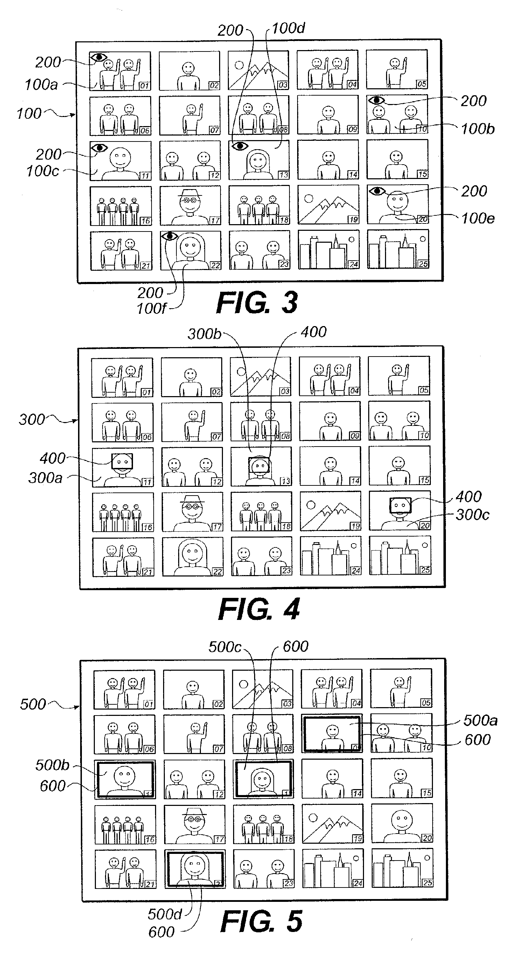

With reference to Fig. 3, an example of the present invention will be described with respect to red-eye removal. As shown in Fig. 3, an index print 100 includes 25 imagettes or thumbnail images which can be low resolution images representative of the 25 images submitted by the customer in the customer order. During the processing of the customer's images in the example of Fig. 3, it has been detected that the original captured images which correspond to thumbnail images 100a, 100b, 100c, 100d, 100e and 100f included defects with respect to red-eye. During the processing of these images, the red-eyes with respect to thumbnail images 100a-100f have been digitally removed and photographic prints with the corrected images (if part of the customer order) have been printed for the customer. Further with respect to the customer order, index print 100 is printed and includes each of thumbnail images 100a-100f along with the remaining thumbnail images of the customer order. Each thumbnail images 100a-100f where red-eye has been removed includes a red-eye icon 200 provided, applied or added thereon. In a feature of the present invention, red-eye icon 200 can be overlayed at a comer of each of thumbnail images 100a-100f. That is, an icon, such as a red-eye icon in accordance with the present invention, is provided, applied or added onto index print 100 in a vicinity of or near each thumbnail image 100a-100f where red-eye has been detected or corrected.

Therefore, upon receiving index print 100 along with the remaining photographic prints of the customer order (if part of the customer order), a customer will appreciate that red-eye has been detected in each of the originally captured images that correspond to thumbnail images 100a-100f through red-eye icons 200. Further, the customer will appreciate that each of the photographic prints that correspond to thumbnail images 100a-100f have been corrected by removing red-eye from the image in each of the prints. This provides a customer with a quick and easy indication as to which prints or images were enhanced by the service provider and also an indication as to what type of correction has been made.

Fig. 4 illustrates a further embodiment of an index print in accordance with the present invention. In the embodiment of Fig. 4, the indicator is in the form of an outline provided around the area where the correction has been made. Index print 300 of Fig. 4 includes thumbnail images in accordance with a customer order. These images include thumbnail images 300a, 300b and 300c where, as an example, red-eye has been detected and corrected. In order to provide a visual indication to a customer that red-eye has been removed from the images, an outline 400 is overlayed or provided on each of thumbnail images 300a-300c. Outline 400 is preferably provided around the eyes where red-eye has been removed so as to provide a customer with a visual indication that red-eye has been removed from the images corresponding to each of thumbnail images 300a-300c.

Fig. 5 illustrates a further example of an index print in accordance with the present invention. Index print 500 in Fig. 5 includes thumbnail images 500a, 500b, 500c and 500d where image correction has been performed in the corresponding captured images. In the embodiment of Fig. 5, the indicator is in the form of a frame 600 such as a color frame around each of thumbnail images 500a-500d. The indicator in the form of frame 600 represents the fact that a correction has been made to the images corresponding to each of thumbnail images 500a-500d. The correction as noted above, could be the removal of red-eye.

With respect to the red-eye removal icons as shown in Fig. 3, the present invention is not limited to red-eye removal or the red-eye icon as shown. Within the contexts of the present invention, a variety of image corrections can be indicated by using different icons, graphical symbols or numerical values to represent or define the corrections made. The following Table 1 is a sampling of icons or graphical symbols that might be used including the red-eye indicator icon noted in Fig. 3

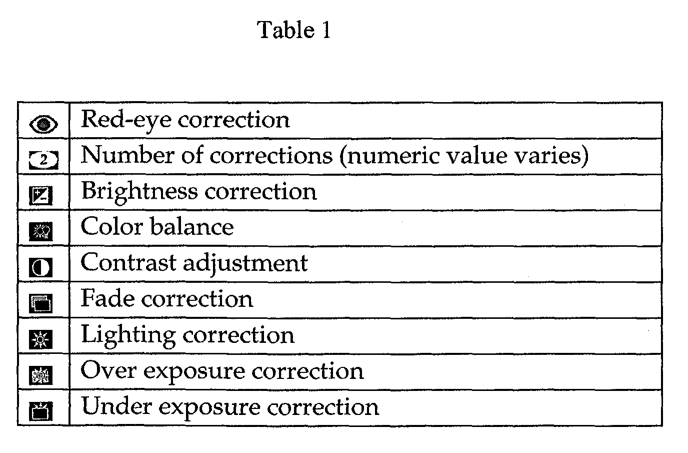

Further, as illustrated in Figs. 4 and 5 other types of indicators can be used instead of or in addition to the icons symbols or numbers noted in Table 1. For example, as shown in Fig. 4, an outline of the corrected area of the image can be provided, or as shown in Fig. 5, a color frame can be provided around the image to indicate corrections. Further, the thumbnail image can include a color background on the frame numbers traditionally used on thumbnail image so as to provide a visual indication that a correction has been made.

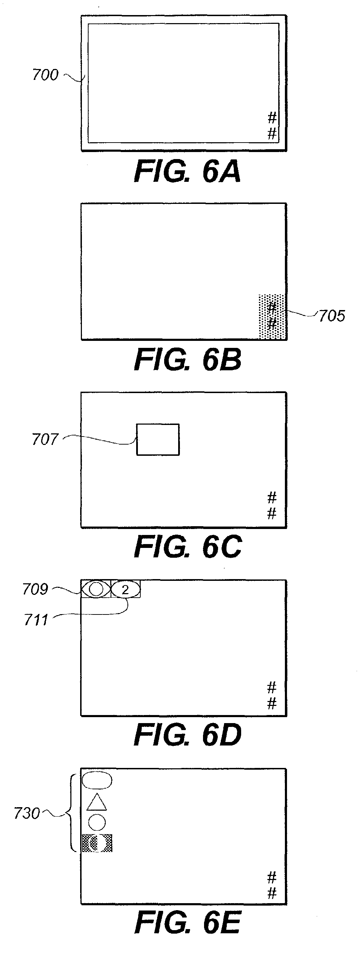

With reference to Fig. 6A-6E examples of the above-noted icons, symbols or numbers in addition to additional methods of indicating that a correction has been made to an imagette or thumbnail image is illustrated. In the example of Fig. 6A, a border or frame 700 is provided around the image to indicate that a correction has been made. This is analogous to frames 600 of the Fig. 5. With respect to Fig. 6B, index prints typically include a frame number on the lower right hand or left hand comer of the thumbnail image or imagette. The indicator of the present invention for illustrating that a correction has been made could be in the form of a color background 705 provided below the frame number as shown in Fig. 6B. With reference to Fig. 6C, the indicator could be in the form of an outline 707 around the corrected area analogous to outline 400 in Fig. 4.

In a further feature of the present invention, in addition to providing an icon or graphical symbol to visually illustrate the type of correction that has been made, a number to indicate how many corrections have been made can also be provided on the thumbnail image. In the example of Fig. 6D, adjacent to icon 709, a numerical representation 711 such as number "2" can be provided. In the example of a red-eye icon, numerical representation 711 as shown in Fig. 6D, could described that two red-eyes have been removed from the associated image. As a further option and with respect to the numerical representation, the final index print could include a number that would be representative of the total number of red-eye pairs removed from all of the corrected images in the customer order.

In a further feature of the present invention, if multiple corrections and/or enhancements have been performed to an image, the present invention can provide for a column 730 of color coded shapes, icons or graphical symbols along the edge of associated image as shown in Fig. 6E. In the example of Fig. 6E, the icons could represent that the associated image has been corrected for red-eye, brightness, overexposure, etc.

In a still further feature of the present invention, the numerical representation as illustrated in Fig. 6D can also be representative of a rating or an amount of enhancement made. That is, using known algorithms, the corrections could be rated on a scale of 1 to 10 to indicate the severity of the red-eye or defect, with 10 indicating the most severe case of red-eye or defect. With this option, the combination of the indicator and the numerical representation would not only described what type of correction has been made through the use of the icon, but also define the severity of the defect by using, for example, a number so as to provide a rating to the amount of correction made. Therefore, in the example of Fig. 6D, icon 709 could indicate that red-eye has been detected and corrected from the image, while number "2" could indicate that on a scale of 1 to 10, the red-eye was less severe.

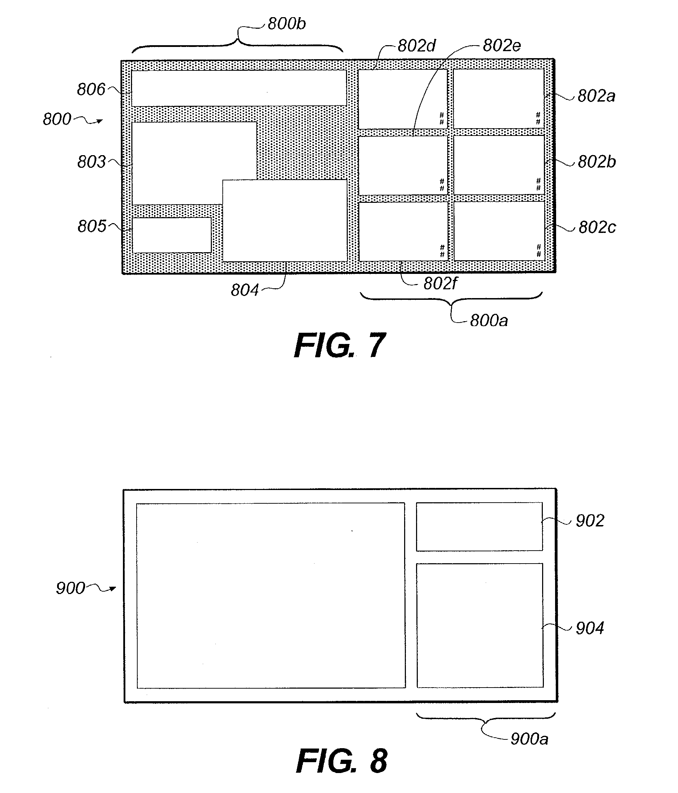

With reference to Figs. 7 and 8, different embodiments for presenting customer information with respect to corrections made to images using thumbnail images or imagettes are shown. In the example of Fig. 7, a photographic print 800 includes one side or section 800a which includes representative thumbnail images 802a-802f wherein image processing in the form of image improvement or correction as been performed to the corresponding captured image. A second side 800b of photographic print 800 may include side by side sample images 803, 804 to illustrate how the images have been improved, an information portion 805 and an advertising portion 806. Further, the background of photographic print 800 could be darkened to facilitate the viewing of the images and identify the print as an informational print.

With reference to Fig. 8, an index print 900 similar to the index print of Figs. 2, 3 and 4 could be extended to include an extended portion or part 900a as shown. Part 900a could include an information section 902 with respect to the corrections made to selected thumbnail images as well as a larger version of a corrected image 904 to more clearly set forth what corrections have been made. As an example, the information provided on the information section could include a legend to define the icon used and the type of corrections made.

Accordingly, the present invention provides for an index print and a method of making an index print which includes an eye-readable indicator on or near selected thumbnail images or imagettes which have been processed in a manner in which improvements or enhancements such as red-eye correction have been made. The indicator represents the type of improvement made to the image so as to provide the customer with information with regard to improvements that have been made on the images.

## Claims

1. A method of providing imaging services, the method comprising the steps of:
receiving an order from a customer requesting imaging services for captured images;
creating an index print which includes a plurality of thumbnail images thereon which correspond to the captured images; and
providing a red-eye icon adjacent to thumbnail images of said plurality of thumbnail images where red-eye has been detected and corrected in said captured images.

2. A method according to claim 1, wherein said red-eye icon is provided on at least one comer of the thumbnail image.

3. A method according to claim 1, comprising the further step of providing photographic prints which include said captured images.

4. A method of providing imaging services comprising the steps of:
receiving images from a customer;
detecting defects in said images;
correcting images of said received images where defects have been detected;
creating an index print which includes thumbnail images that correspond to the received images; and
providing an indicator adjacent to said thumbnail images which correspond to the corrected images, said indicator providing a visual indication of the type of correction made to the corrected images.

5. A method according to claim 4, wherein said step of providing an indicator on said thumbnail images comprises providing a graphical symbol adjacent to said thumbnail images which correspond to corrected images.

6. A method according to claim 5, wherein said graphical symbol represents that a correction with regard to at least one of brightness, color balance, contrast, fade, lighting, overexposure and underexposure has been made to the image.

7. An index print (100, 300, 500) comprising:
a plurality of thumbnail images, wherein at least one of said thumbnail images is a corrected image in which a defect has been detected and corrected; and
an indicator (200, 400, 600) provided in a vicinity of said at least one thumbnail image, said indicator providing a visual indication of a type of correction made to the corrected image.

8. A method of creating an index print, the method comprising the steps of:
providing a plurality of thumbnail images on a photographic print;
determining which of the plurality of thumbnail images are images in which an image correction has been performed; and
providing an indicator in a vicinity of the thumbnail images where image correction has been performed, said indicator representing a type of correction made to the image.

9. A method of providing photofinishing services, the method comprising the steps of:
receiving a photofinishing order from a customer;
providing photographic prints in accordance with the photofinishing order;
creating an index print which includes a plurality of thumbnail images thereon which correspond to images on each of the photographic prints; and
providing a red-eye icon in a vicinity of thumbnail images of said plurality of thumbnail images where red-eye has been detected and corrected.

10. A photofinishing method comprising the steps of:
receiving a photographic film having exposed images thereon from a customer;
detecting defects in said exposed images;
processing the photographic film to create photographic prints that include said exposed images, said processing step comprising the step of correcting images on which defects have been detected;
creating an index print which includes thumbnail images that correspond to the images on said photographic prints; and
providing an indicator near said thumbnail images which correspond to the corrected images, said indicator providing a visual indication of the type of correction made to the corrected images.
